# EUROPÄISCHE PATENTSCHRIFT

(11) **EP 4 484 662 B1**
(45) Veröffentlichungstag und Bekanntmachung des Hinweises auf die Patenterteilung: **29.10.2025**
(21) Anmeldenummer: 24179831.3
(22) Anmeldetag: 04.06.2024
(51) Int. Cl.: E03F 7/12, G03B 37/00, F16L 55/26

(54) **VORRICHTUNG FÜR DIE KANALROHRINSPEKTION UND/ODER -SANIERUNG EINER VON EINEM HAUPTKANAL ABZWEIGENDEN ANSCHLUSSLEITUNG**
DEVICE FOR SEWER PIPE INSPECTION AND/OR REHABILITATION OF A CONNECTING PIPE BRANCHING OFF FROM A MAIN SEWER
DISPOSITIF POUR L'INSPECTION ET/OU LA RÉNOVATION DE CANALISATIONS D'UNE LIGNE DE RACCORDEMENT QUI EST PRISE PAR UN CANAL PRINCIPAL

(30) Priorität: 27.06.2023 DE 102023116834
(43) Veröffentlichungstag der Anmeldung: 01.01.2025
(73) Patentinhaber: IBAK Helmut Hunger GmbH & Co. KG, 24148 Kiel (DE)
(72) Erfinder: Stock, Markus, 24105 Kiel (DE)
(74) Vertreter: Lobemeier, Martin Landolf

(56) Entgegenhaltungen:
- EP-B1- 1 070 905
- DE-A1- 102020 210 713
- DE-A1- 19 505 195
- DE-U1- 202004 018 174
- DE-U1- 202014 004 259
- DE-U1- 8 118 053

## Beschreibung

Die Erfindung betrifft eine Vorrichtung für die Kanalrohrinspektion und/oder -sanierung einer von einem Hauptkanal abzweigenden Anschlussleitung. Insbesondere betrifft die Erfindung eine Vorrichtung für die Kanalrohrinspektion und/oder -sanierung einer von einem Hauptkanal abzweigenden Anschlussleitung mit einem sich entlang einer Längsachse erstreckenden Fahrwagen, einem am Fahrwagen angeordneten, lateralen Inspektions- und/oder Sanierungssystem, das eine mittels eines Schiebestabs gegenüber dem Fahrwagen verschieblich gelagerte Inspektions- und/oder Sanierungseinheit und ein schwenkbar gelagertes, zur Führung der Inspektions- und/oder Sanierungseinheit aus einem Hauptkanal in eine vom Hauptkanal abzweigende Anschlussleitung eingerichtetes Führungselement mit einem mit dem Fahrwagen verbundenen Ende und einem dem mit dem Fahrwagen verbundenen Ende gegenüberliegenden freien Ende, aufweist, und einer das freie Ende des Führungselements erfassenden Kamera.

Derartige, aus offenkundiger Vorbenutzung bekannte Vorrichtungen ermöglichen mittels eines am Fahrwagen angeordneten schwenkbaren Führungselements das Einbringen eines mit dem Fahrwagen mitgeführten Satellitensystems in Anschlussleitungen von Hauptkanälen unterschiedlicher Nennweite von beispielsweise DN150 bis DN 2000, um dort Inspektions- und/oder Sanierungsarbeiten auszuführen. Das Einbringen des Satellitensystems in eine Anschlussleitung wird mithilfe einer mit dem Fahrwagen mitgeführten Kamera durchgeführt, die auf das freie Ende des schwenkbaren Führungselements gerichtet ist. Insbesondere wird hierfür eine Schwenkkopfkamera verwendet, deren optische Achse in der Nullstellung der Schwenkkopfkamera parallel zur Längsachse des Fahrwagens ausgerichtet ist, sodass ausschließlich ein im Wesentlichen vor der Kamera bzw. vor dem Fahrwagen angeordneter Bereich beobachtet werden kann. Durch Verschwenken der Kamera kann das Sichtfeld der Schwenkkopfkamera so ausgerichtet werden, dass das freie Ende erfasst und bei Annäherung an eine Anschlussleitung sichergestellt werden kann, dass das Satellitensystem, also eine gegenüber dem Fahrwagen verschieblich gelagerte Inspektions- und/oder Sanierungseinheit in die Anschlussleitung eingeführt werden kann.

Die Dokumente DE 10 2020 210713 A1 und DE 20 2014 004259 U1 zeigen Vorrichtungen mit und ohne verschwenkbarer Kamera.

An dieser Ausgestaltung hat sich als nachteilig erwiesen, dass das Sichtfeld größtenteils den der Schwenkkopfkamera am nächsten liegenden Abschnitt des Führungselements erfasst und dem freien Ende nur ein geringer Anteil am Sichtfeld zukommt, sodass zur exakten Positionierung des freien Endes im Verhältnis zur Anschlussleitung eine Abbildung gerade des freien Endes des Führungselements nur unzufriedenstellend erfolgt. Darüber hinaus stören durch Reflexion am Führungselement hervorgerufene Artefakte die Beobachtung des freien Endes des Führungselements, die die exakte Positionierung des Führungselements relativ zur Anschlussleitung erschweren.

Aufgabe der Erfindung ist es daher, eine Vorrichtung für die Kanalrohrinspektion und/oder - sanierung einer von einem Hauptkanal abzweigenden Anschlussleitung zu schaffen, die eine bessere Sicht auf das freie Ende des Führungselements und damit eine exakte Positionierung des Führungselements relativ zur Anschlussleitung ermöglicht.

Diese Aufgabe wird erfindungsgemäß durch die Vorrichtung für die Kanalrohrinspektion und/oder -sanierung einer von einem Hauptkanal abzweigenden Anschlussleitung mit den Merkmalen von Anspruch 1 gelöst. Die Unteransprüche geben vorteilhafte Ausgestaltungen der Erfindung wieder.

Grundgedanke der Erfindung ist es, die Sicht auf das freie Ende des Führungselements dadurch zu verbessern, dass die üblicherweise parallel zum Fahrwagen ausgerichtete Schwenkkopfkamera im Wesentlichen senkrecht zum Fahrwagen ausgerichtet wird, wodurch der Abstand der Kamera zum mit dem Fahrwagen verbundenen Abschnitt des Führungselements zur Kamera vergrößert und der Einfluss von Reflexionen dadurch vermindert wird.

Zugleich ermöglicht die Anordnung, bei der die optische Achse der Schwenkkopfkamera in der Nullstellung quer zur Längsachse des Fahrwagens ausgerichtet ist, das Verschwenken der Schwenkkopfkamera zu einem in Fahrtrichtung des Fahrwagens vor diesem gelegenen Abschnitt und zu einem entgegen der Fahrtrichtung des Fahrwagens hinter diesem gelegenen Abschnitt ohne dass es einer Rückfahrkamera bedarf. Die rückblickende Ansicht ist insbesondere sinnvoll, um den Verlauf von rückwärtigen Kabeln und Spülschläuchen im Blick zu behalten.

Darüber hinaus gleicht die Anordnung der erfindungsgemäß eingerichteten Schwenkkopfkamera einem Periskop, das eine Beobachtung des freien Endes des Führungselements selbst dann ermöglicht, wenn der Fahrwagen in einem mit Abwasser gefüllten Rohr unter der Wasserlinie angeordnet sein sollte.

Um zu vermeiden, dass die sich quer zur Längsachse des Fahrwagens erstreckende Schwenkkopfkamera aufgrund eines vergrößerten Außenumrisses beim Einbringen in den Schacht störend auswirkt, ist schließlich vorgesehen, dass die Kamera mittels eines Federgelenks mit dem Fahrwagen verbunden ist. Bei dieser Ausgestaltung kann die Kamera Hindernissen passiv ausweichen und zwischenzeitlich auch durch enge Schächte und Rohre geführt werden.

Erfindungsgemäß wird also eine Vorrichtung für die Kanalrohrinspektion und/oder -sanierung einer von einem Hauptkanal abzweigenden Anschlussleitung vorgeschlagen, mit einem sich entlang einer Längsachse erstreckenden Fahrwagen, einem mit dem Fahrwagen verbundenen, lateralen Inspektions- und/oder Sanierungssystem, das eine mittels eines Schiebestabs gegenüber dem Fahrwagen verschieblich gelagerte Inspektions- und/oder Sanierungseinheit und ein schwenkbar gelagertes, zur Führung der Inspektions- und/oder Sanierungseinheit aus einem Hauptkanal in eine vom Hauptkanal abzweigende Anschlussleitung eingerichtetes Führungselement mit einem mit dem Fahrwagen verbundenen Ende und einem dem mit dem Fahrwagen verbundenen Ende gegenüberliegenden freien Ende, aufweist, und einer das freie Ende des Führungselements erfassenden Schwenkkopfkamera, wobei die Schwenkkopfkamera mit dem Fahrwagen verbunden ist, wobei die optische Achse der Schwenkkopfkamera in der Nullstellung quer zur Längsachse des Fahrwagens ausgerichtet ist und deren Schwenkwinkel die Abbildung eines in Bezug auf die Längsachse des Fahrwagens vor und hinter der Schwenkkopfkamera angeordneten Sichtfelds erlaubt.

Bei der Nullstellung der Schwenkkopfkamera handelt es sich um eine definierte Ausgangsposition, von der aus die Schwenkkopfkamera in entgegengesetzte Richtungen verschwenkt werden kann. Die Nullstellung der Schwenkkopfkamera kann beispielsweise bei Ausgestaltung mit einem länglichen Kameragehäuse zusätzlich derart definiert sein, dass die optische Achse der Schwenkkopfkamera in der Längsachse des Kameragehäuses liegt. Jedenfalls ist die Schwenkkopfkamera erfindungsgemäß derart angeordnet, dass die Schwenkkopfkamera einen in Bezug auf die Längsachse des Fahrwagens vor und hinter der Schwenkkopfkamera angeordneten Bereich bzw. einem vor und hinter dem Fahrwagen liegenden Bereich erfassen kann und somit nicht nur zur Beobachtung des Führungselements, sondern auch als klassische Rückschaukamera eingesetzt werden kann.

Bevorzugt ist die optische Achse in der Nullstellung der Schwenkkopfkamera jedenfalls senkrecht zur Längsachse des Fahrwagens ausgerichtet, wobei der Schwenkwinkel der Schwenkkopfkamera besonders bevorzugt wenigstens ± 60° beträgt. Der Schwenkwinkel ist jedenfalls so zu wählen, dass ein hinreichend nach vorn und nach hinten erfassbares Sichtfeld eingestellt werden kann, das in jedem Fall bei einem Schwenk in Fahrtrichtung zur Beobachtung des freien Endes des Führungselements eingerichtet ist.

Die Schwenkkopfkamera ist speziell als Dreh-/Schwenkkopfkamera ausgebildet, sodass mithilfe der im engeren Sinn für die Beobachtung des freien Endes des Führungselements vorgesehene Kamera auch für eine umfassende Inspektion eines Kanalrohrs, insbesondere des Bereichs um eine Anschlussleitung vorgenommen werden kann.

Die Schwenkkopfkamera ist bevorzugt mittels eines Gelenks mit dem Fahrwagen verbunden, das ein Anklappen der Schwenkkopfkamera an den Fahrwagen erlaubt, um möglichen Hindernissen auszuweichen. Das Gelenk kann einen Motor beinhalten, der ein aktives Anklappen der Schwenkkopfkamera ermöglicht. Bevorzugt ist jedoch vorgesehen, dass das Gelenk ein elastisches Element aufweist, sodass die Schwenkkopfkamera bei Berührung mit der Rohrwandung oder der Wandung eines Schachts oder sonstigen einen Widerstand ausübenden Elementen passiv ausweichen und ebenso passiv in ihre Ausgangsstellung zurückkehren kann. Das elastische Element kann insbesondere ein Federgelenk sein, wobei das Federgelenk speziell ein elastisches Federelement aus Kunststoff oder ein als Druck- oder Zugfeder ausgebildetes elastisches Federelement, speziell aus Metall aufweist.

Weiter weist die Schwenkkopfkamera bevorzugt eine das Sichtfeld der Schwenkkopfkamera beleuchtende Beleuchtung auf. Insbesondere ist die Beleuchtung derart angeordnet, dass diese mit dem Objektiv der Kamera mitschwenkt, sodass nur der betrachtete Rohrbereich ausgeleuchtet wird. Bei einer alternativen nicht-erfindungsgemäßen Lösung mit einem Fischaugenobjektiv müsste die Beleuchtung hingegen deutlich lichtstärker ausfallen, um den größeren Raumwinkel ausreichend ausleuchten zu können.

Das Federgelenk weist bevorzugt ein elastisches Federelement aus Kunststoff auf. Insbesondere weist das Federgelenk ein als Druck- oder Zugfeder ausgebildetes elastisches Federelement auf, wobei die Druck- oder Zugfeder auch aus Metall gefertigt sein kann.

Die Kamera ist dem Führungselement bevorzugt benachbart angeordnet, wobei besonders bevorzugt vorgesehen ist, dass das Führungselement und die Kamera mittels eines Lifts mit dem Fahrwagen verbunden sind, wobei der Lift zum Anheben des Führungselements und der Kamera vom Fahrwagen eingerichtet ist. Höchst bevorzugt ist der Lift dabei zum Anheben des Führungselements und der Kamera vom Fahrwagen ein Verschwenken des Führungselements gemeinsam mit der Kamera um eine quer zur Längsachse ausgerichtete Schwenkachse bewirkend eingerichtet. Alternativ kann der Lift einen Parallelhub des Führungselements und der Kamera bewirkend eingerichtet sein.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine schematische Darstellung eines besonders bevorzugt ausgestalteten Ausführungsbeispiels nach der Erfindung beim Einbringen in einen Schacht;
- Fig. 2: eine schematische Darstellung eines besonders bevorzugt ausgestalteten Ausführungsbeispiels nach der Erfindung in einem Kanalrohr beim Abbiegevorgang eines lateralen Inspektionssystems vom Hauptkanal in eine Anschlussleitung; und
- Fig. 3: eine schematische Darstellung eines weiteren besonders bevorzugt ausgestalteten Ausführungsbeispiels nach der Erfindung in einem Kanalrohr beim Abbiegevorgang eines lateralen Inspektionssystems vom Hauptkanal in eine Anschlussleitung.

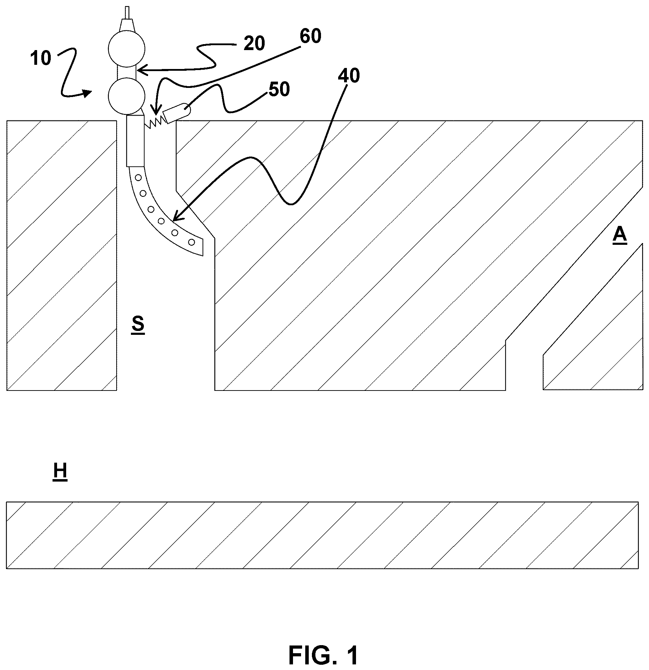

Fig. 1 zeigt eine schematische Darstellung eines besonders bevorzugt ausgestalteten Ausführungsbeispiels nach der Erfindung beim Einbringen in einen Schacht. Insbesondere zeigt Fig. 1 eine in einen zu einem Hauptkanal H führenden Schacht S eingebrachte Vorrichtung 10 für die Kanalrohrinspektion und/oder -sanierung. Die Vorrichtung 10 weist einen sich entlang einer Längsachse erstreckenden Fahrwagen 20, ein mit dem Fahrwagen 20 verbundenes, laterales Inspektions- und/oder Sanierungssystem mit einem schwenkbar gelagerten Führungselement 40 zur Führung einer Inspektions- und/oder Sanierungseinheit aus einem Hauptkanal (H) in eine vom Hauptkanal (H) abzweigende Anschlussleitung (A) und eine das freie Ende des Führungselements 40 erfassende Schwenkkopfkamera 50 auf.

Es ist zu erkennen, dass die Schwenkkopfkamera 50 insbesondere mittels eines als Feder ausgebildeten elastischen Elements 60 mit dem Fahrwagen 10 verbunden ist, sodass die Schwenkkopfkamera 50 Hindernissen passiv ausweichen und ebenso passiv in die Ausgangsposition zurückkehren kann.

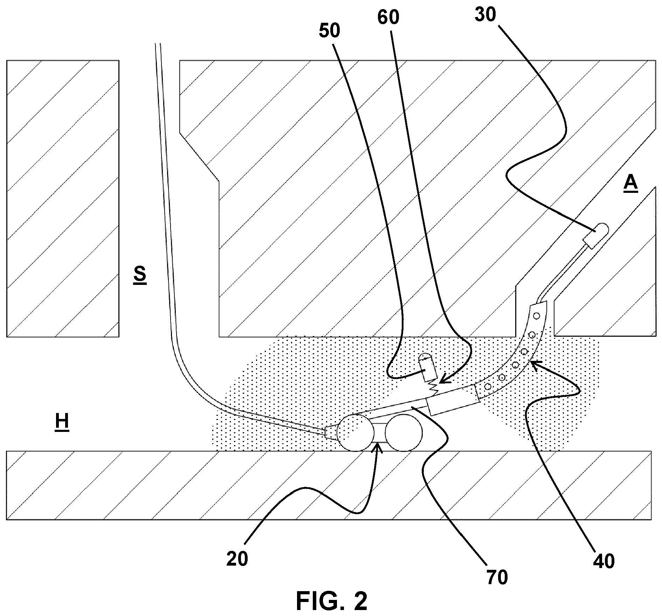

Aus Fig. 2, die eine schematische Darstellung eines besonders bevorzugt ausgestalteten Ausführungsbeispiels nach der Erfindung in einem Kanalrohr beim Abbiegevorgang eines lateralen Inspektionssystems vom Hauptkanal in eine Anschlussleitung zeigt, ist ersichtlich, dass die dem Führungselement 40 benachbart angeordnete Schwenkkopfkamera 50 und das Führungselement 40 und die Kamera 50 mittels eines Lifts 70 mit dem Fahrwagen 20 verbunden sind, wobei der Lift 70 zum Anheben des Führungselements 40 und der Schwenkkopfkamera 50 vom Fahrwagen 20 eingerichtet ist. Derart ist es möglich, dass eine mittels eines Schiebestabs gegenüber dem Fahrwagen 20 verschieblich gelagerte Inspektions- und/oder Sanierungseinheit 30 aus dem Hauptkanal H in die Anschlussleitung A vorgeschoben werden kann.

Da die Schwenkkopfkamera 50 mit dem Fahrwagen 20 derart verbunden ist, dass die optische Achse der Schwenkkopfkamera 50 in der Nullstellung quer zur Längsachse des Fahrwagens 20 ausgerichtet ist, wird durch Schwenken der Schwenkkopfkamera 50 ermöglicht, dass ein in Bezug auf die Längsachse des Fahrwagens 20 vor und hinter der Schwenkkopfkamera 50 angeordneter Bereich abgebildet wird. Der Sichtbereich der Schwenkkopfkamera 50, der allein durch Schwenken der Kamera erfasst werden kann, ist beispielhaft durch die gepunktete Fläche schematisch angedeutet.

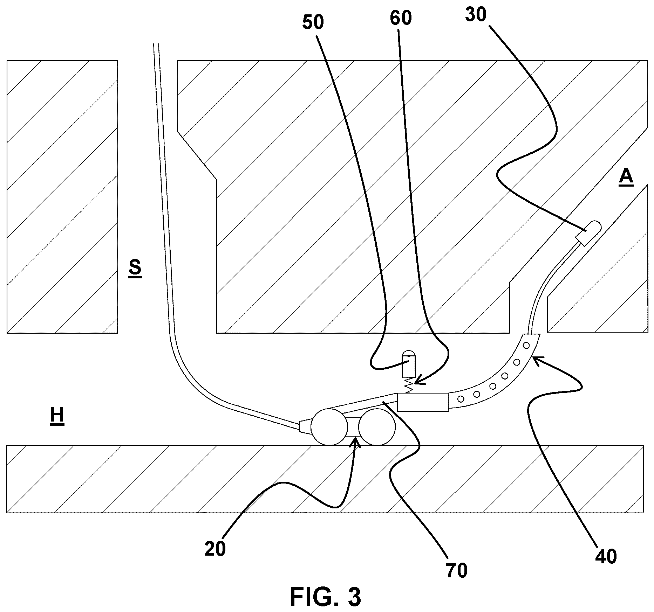

Schließlich zeigt Fig. 3 eine schematische Darstellung eines weiteren besonders bevorzugt ausgestalteten Ausführungsbeispiels nach der Erfindung in einem Kanalrohr beim Abbiegevorgang eines lateralen Inspektionssystems vom Hauptkanal in eine Anschlussleitung, wobei der Unterschied zum vorherigen in Fig. 2 gezeigten Ausführungsbeispiel darin besteht, dass der Lift der in Fig. 3 abgebildeten Ausgestaltung einen Parallelhub von Führungselement 40 und Schwenkkopfkamera 50 bewirkt.

## Patentansprüche

1. Vorrichtung (10) für die Kanalrohrinspektion und/oder -sanierung einer von einem Hauptkanal (H) abzweigenden Anschlussleitung (A), mit
- einem sich entlang einer Längsachse erstreckenden Fahrwagen (20),
- einem mit dem Fahrwagen (20) verbundenen, lateralen Inspektions- und/oder Sanierungssystem, das
o eine mittels eines Schiebestabs gegenüber dem Fahrwagen verschieblich gelagerte Inspektions- und/oder Sanierungseinheit (30) und
o ein schwenkbar gelagertes, zur Führung der Inspektions- und/oder Sanierungseinheit aus einem Hauptkanal (H) in eine vom Hauptkanal (H) abzweigende Anschlussleitung (A) eingerichtetes Führungselement (40) mit einem mit dem Fahrwagen (20) verbundenen Ende und einem dem mit dem Fahrwagen (20) verbundenen Ende gegenüberliegenden freien Ende, aufweist, und
- einer das freie Ende des Führungselements (40) erfassenden Schwenkkopfkamera (50),
**dadurch gekennzeichnet, dass**
die Schwenkkopfkamera (50) mit dem Fahrwagen (10) verbunden ist, wobei die optische Achse der Schwenkkopfkamera (50) in der Nullstellung quer zur Längsachse des Fahrwagens (20) ausgerichtet ist und deren Schwenkwinkel die Abbildung eines in Bezug auf die Längsachse des Fahrwagens (20) vor und hinter der Schwenkkopfkamera (50) angeordneten Sichtfelds erlaubt.

2. Vorrichtung (10) nach Anspruch 1, **dadurch gekennzeichnet, dass** die Schwenkkopfkamera (50) mittels eines Gelenks (60) mit dem Fahrwagen (10) verbunden ist.

3. Vorrichtung (10) nach Anspruch 2, **dadurch gekennzeichnet, dass** das Gelenk (60) ein elastisches Element aufweist.

4. Vorrichtung nach Anspruch 3, **dadurch gekennzeichnet, dass** das elastische Element (60) ein Federgelenk (60) ist.

5. Vorrichtung (10) nach Anspruch 4, **dadurch gekennzeichnet, dass** das Federgelenk (60) ein elastisches Federelement aus Kunststoff aufweist.

6. Vorrichtung (10) nach Anspruch 4, **dadurch gekennzeichnet, dass** das Federgelenk (60) ein als Druckfeder oder als Zugfeder ausgebildetes elastisches Federelement aufweist.

7. Vorrichtung (10) nach einem der vorhergehenden Ansprüche, **dadurch gekennzeichnet, dass** die optische Achse in der Nullstellung der Schwenkkopfkamera (50) senkrecht zur Längsachse des Fahrwagens (20) ausgerichtet ist.

8. Vorrichtung (10) nach einem der vorhergehenden Ansprüche, **dadurch gekennzeichnet, dass** der Schwenkwinkel der Schwenkkopfkamera (50) wenigstens ± 60° beträgt.

9. Vorrichtung (10) nach einem der vorhergehenden Ansprüche, **dadurch gekennzeichnet, dass** die Schwenkkopfkamera (50) eine Dreh-/Schwenkkopfkamera ist.

10. Vorrichtung (10) nach einem der vorhergehenden Ansprüche, **dadurch gekennzeichnet, dass** die Schwenkkopfkamera (50) eine das Sichtfeld der Schwenkkopfkamera (50) beleuchtende Beleuchtung aufweist.

11. Vorrichtung (10) nach einem der vorhergehenden Ansprüche, **dadurch gekennzeichnet, dass** die Schwenkkopfkamera (50) dem Führungselement (40) benachbart angeordnet ist.

12. Vorrichtung (10) nach einem der vorhergehenden Ansprüche, **dadurch gekennzeichnet, dass** das Führungselement (40) und die Kamera (50) mittels eines Lifts (70) mit dem Fahrwagen (20) verbunden sind, wobei der Lift (70) zum Anheben des Führungselements (40) und der Kamera (50) vom Fahrwagen (20) eingerichtet ist.

13. Vorrichtung (10) nach Anspruch 12, **dadurch gekennzeichnet, dass** der Lift (70) zum Anheben des Führungselements (40) und der Kamera (50) vom Fahrwagen (20) ein Verschwenken des Führungselements (40) gemeinsam mit der Kamera (50) um eine quer zur Längsachse ausgerichtete Schwenkachse bewirkend eingerichtet ist.

14. Vorrichtung (10) nach Anspruch 12, **dadurch gekennzeichnet, dass** der Lift (70) einen Parallelhub des Führungselements (40) und der Kamera (50) bewirkend eingerichtet ist.

## Claims

1. Device (10) for sewer pipe inspection and/or rehabilitation of a connecting pipe (A) branching off from a main sewer (H), comprising
- a carriage (20) extending along a longitudinal axis,
- a lateral inspection and/or refurbishment system connected to the carriage (20), having
∘ an inspection and/or refurbishment unit (30) mounted for displacement relative to the carriage by means of a push rod, and
∘ a swivel-mounted guide element (40) set up to guide the inspection and/or rehabilitation unit from a main sewer (H) into a connection pipe (A) branching off from the main sewer (H), with one end connected to the carriage (20) and a free end opposite the end connected to the carriage (20),
and
- a swivel head camera (50) capturing the free end of the guide element (40),
**characterized in that**
the swivel head camera (50) is connected to the carriage (10), the optical axis of the swivel head camera (50) being aligned transversely to the longitudinal axis of the carriage (20) in the zero position and its swivel angle permitting the imaging of a field of view arranged in front of and behind the swivel head camera (50) with respect to the longitudinal axis of the carriage (20).

2. Device (10) according to claim 1, **characterized in that** the swivel head camera (50) is connected to the carriage (10) by means of a joint (60).

3. Device (10) according to claim 2, **characterized in that** the joint (60) has an elastic element.

4. Device according to claim 3, **characterized in that** the elastic element (60) is a spring joint (60).

5. Device (10) according to claim 4, **characterized in that** the spring joint (60) has an elastic spring element made of plastic.

6. Device (10) according to claim 4, **characterized in that** the spring joint (60) has an elastic spring element designed as a compression spring or as a tension spring.

7. Device (10) according to one of the preceding claims, **characterized in that** the optical axis in the zero position of the swivel head camera (50) is aligned perpendicular to the longitudinal axis of the carriage (20).

8. Device (10) according to one of the preceding claims, **characterized in that** the swivel angle of the swivel head camera (50) is at least ± 60°.

9. Device (10) according to one of the preceding claims, **characterized in that** the swivel head camera (50) is a rotating swivel head camera.

10. Device (10) according to one of the preceding claims, **characterized in that** the swivel head camera (50) has an illumination illuminating the field of view of the swivel head camera (50).

11. Device (10) according to one of the preceding claims, **characterized in that** the swivel head camera (50) is arranged adjacent to the guide element (40).

12. Device (10) according to one of the preceding claims, **characterized in that** the guide element (40) and the camera (50) are connected to the carriage (20) by means of a lift (70), the lift (70) being set up for lifting the guide element (40) and the camera (50) from the carriage (20).

13. Device (10) according to claim 12, **characterized in that** the lift (70) for lifting the guide element (40) and the camera (50) from the carriage (20) is set up to effect a pivoting of the guide element (40) together with the camera (50) about a pivot axis aligned transversely to the longitudinal axis.

14. Device (10) according to claim 12, **characterized in that** the lift (70) is set up to effect a parallel stroke of the guide element (40) and the camera (50).

## Revendications

1. Dispositif (10) pour l'inspection et/ou l'assainissement de canalisation d'une conduite de raccordement (A) bifurquant d'un canal principal (H), comportant
- un chariot (20) s'étendant le long d'un axe longitudinal,
- un système d'inspection et/ou d'assainissement latéral relié au chariot (20), lequel système présente
∘ une unité d'inspection et/ou d'assainissement (30) montée de manière à pouvoir être déplacée par rapport au chariot au moyen d'une tige de poussée et
∘ un élément de guidage (40) monté de manière à pouvoir pivoter, conçu pour guider l'unité d'inspection et/ou d'assainissement depuis un canal principal (H) dans une conduite de raccordement (A) bifurquant du canal principal (H) et comportant une extrémité reliée au chariot (20) et une extrémité libre opposée à l'extrémité reliée au chariot (20),
et
- une caméra à tête pivotante (50) détectant l'extrémité libre de l'élément de guidage (40),
**caractérisé en ce que**
la caméra à tête pivotante (50) est reliée au chariot (10), dans lequel l'axe optique de la caméra à tête pivotante (50) est orienté, dans la position zéro, transversalement à l'axe longitudinal du chariot (20) et son angle de pivotement permet la représentation d'un champ de vision disposé devant et derrière la caméra à tête pivotante (50) par rapport à l'axe longitudinal du chariot (20).

2. Dispositif (10) selon la revendication 1, **caractérisé en ce que** la caméra à tête pivotante (50) est reliée au chariot (10) au moyen d'une articulation (60).

3. Dispositif (10) selon la revendication 2, **caractérisé en ce que** l'articulation (60) présente un élément élastique.

4. Dispositif selon la revendication 3, **caractérisé en ce que** l'élément élastique (60) est une articulation à ressort (60).

5. Dispositif (10) selon la revendication 4, **caractérisé en ce que** l'articulation à ressort (60) présente un élément formant ressort élastique en matière plastique.

6. Dispositif (10) selon la revendication 4, **caractérisé en ce que** l'articulation à ressort (60) présente un élément formant ressort élastique conçu comme un ressort de compression ou comme un ressort de traction.

7. Dispositif (10) selon l'une des revendications précédentes, **caractérisé en ce que** l'axe optique est orienté perpendiculairement à l'axe longitudinal du chariot (20) dans la position zéro de la caméra à tête pivotante (50).

8. Dispositif (10) selon l'une des revendications précédentes, **caractérisé en ce que** l'angle de pivotement de la caméra à tête pivotante (50) est d'au moins ± 60°.

9. Dispositif (10) selon l'une des revendications précédentes, **caractérisé en ce que** la caméra à tête pivotante (50) est une caméra à tête tournante/pivotante.

10. Dispositif (10) selon l'une des revendications précédentes, **caractérisé en ce que** la caméra à tête pivotante (50) présente un éclairage éclairant le champ de vision de la caméra à tête pivotante (50).

11. Dispositif (10) selon l'une des revendications précédentes, **caractérisé en ce que** la caméra à tête pivotante (50) est disposée de manière à être adjacente à l'élément de guidage (40).

12. Dispositif (10) selon l'une des revendications précédentes, **caractérisé en ce que** l'élément de guidage (40) et la caméra (50) sont reliés au chariot (20) au moyen d'un élévateur (70), dans lequel l'élévateur (70) est conçu pour soulever l'élément de guidage (40) et la caméra (50) du chariot (20).

13. Dispositif (10) selon la revendication 12, **caractérisé en ce que** l'élévateur (70) permettant de soulever l'élément de guidage (40) et la caméra (50) du chariot (20) est conçu pour provoquer un pivotement de l'élément de guidage (40) conjointement avec la caméra (50) autour d'un axe de pivotement orienté transversalement à l'axe longitudinal.

14. Dispositif (10) selon la revendication 12, **caractérisé en ce que** l'élévateur (70) est conçu pour provoquer une course parallèle de l'élément de guidage (40) et de la caméra (50).
